Europäisches Patentamt

**European Patent Office**

**Office européen des brevets**

(11) Numéro de publication: **0 197 805**
**A1**

(12) **DEMANDE DE BREVET EUROPEEN**

(21) Numéro de dépôt: **86400370.2**

(22) Date de dépôt: **21.02.86**

(51) Int. Cl.⁴: **A 23 B 7/156**
**A 23 B 7/06, A 23 L 3/00**

(30) Priorité: **06.03.85 FR 8503282**

(43) Date de publication de la demande:
**15.10.86 Bulletin 86/42**

(84) Etats contractants désignés:
**AT BE CH DE GB IT LI LU NL SE**

(71) Demandeur: **SICA VAL-DU-CHER**
**Bourre**
**F-41400 Montrichard(FR)**

(72) Inventeur: **Mestre, Gilles**
**La Fosse aux Loups Saint Julien de Chedon**
**F-41400 Montrichard(FR)**

(74) Mandataire: **CABINET BONNET-THIRION**
**95 Boulevard Beaumarchais**
**F-75003 Paris(FR)**

(54) **Procédé de traitement en vue de leur conservation de denrées périssables présentant des vides ou des pores tels que les champignons.**

(57) Procédé et dispositif de traitement en vue de leur conservation de denrées périssables présentant des vides ou des pores, notamment les chapigons de couche, mettant en oeuvre le passage dans une enceinte a vide (40) une impregnation par un liquide, puis de passage dans un récipient (32), dit blancheur . Ce procede est caracterise en ce que le liquide d'imprégnation est une suspension de matière amylacée dans de l'eau.

*FIG.1*

*FIG.2*

EP 0 197 805 A1

"Procédé de traitement en vue de leur conservation de denrées périssables présentant des vides ou des pores tels que les champignons".

--- --- --- ---

La présente invention concerne les procédés de traitement en vue de leur conservation de denrées périssables présentant des vides ou des pores, tels que les champignons, notamment les champignons de couche ou champignons de Paris.

On connaît des procédés de traitement des champignons de couche consistant à soumettre les champignons à deux opérations successives, dont l'une est une mise en contact avec un liquide contenant une substance alimentaire susceptible de coaguler à la chaleur, et dont l'autre est un "blanchiment" consistant à maintenir les champignons dans un liquide à haute température pendant un temps déterminé, ceci afin de les rendre aptes à la conservation.

Préalablement à la mise en contact des champignons avec le liquide de traitement, on abaisse de façon considérable la pression du milieu ambiant à l'intérieur d'une enceinte confinée, dite "enceinte à vide", après y avoir placé les champignons, ceci afin d'en ouvrir les pores par différence de pression entre l'intérieur et l'extérieur, opération appelée "désaération", ce qui facilite l'imprégnation des champignons par le liquide contenant une substance coagulante. La coagulation qui intervient lors du traitement thermique ultérieur bouche les pores des champignons ce qui, outre l'augmentation de poids obtenue lors de l'étape d'imprégnation et son maintien grâce à la coagulation, permet également au champignon de conserver tous ses constituants ainsi que ses propriétés organoleptiques. L'opération ultérieure de blanchiment est destinée à traiter les champignons et à les conditionner de manière à pouvoir être mis en conserve. De tels procédés sont couramment employés mais ils comportent néanmoins des inconvénients.

La substance susceptible de coaguler que l'on utilise mélangée au liquide de traitement est généralement une substance colloïdale comme par exemple du blanc d'oeuf frais ou en poudre. Ceci présente divers inconvénients :

   - d'abord il s'agit d'une substance d'origine animale ce qui crée un certain risque d'ordre bactériologique et implique par conséquent un contrôle vétérinaire du même type que pour les conserves de produits carnés ou "ovoproduits" ;

   - de plus la substance colloïdale utilisée est particulièrement coûteuse ce qui a pour effet d'augmenter globalement le prix de revient du procédé ;

   - le blanc d'oeuf a en outre l'inconvénient de mousser, ce qui oblige à procéder après l'opération d'imprégnation des produits à une opération de lavage intervenant avant l'opération de blanchiment.

   L'objet de la présente invention est un procédé de traitement pour la conservation des denrées périssables présentant des vides ou des pores permettant de remédier aux inconvénients précédemement cités. Plus précisément, le procédé de traitement suivant la présente invention pour la conservation des denrées périssables présentant des vides ou des pores comporte de manière connue en soi les étapes de :

   - réduction de la pression de l'air à l'intérieur d'une enceinte à vide hermétiquement close dans laquelle sont placées les denrées périssables, et ce pendant une durée déterminée ;

   - imprégnation desdites denrées avec un liquide qui rétablit, lorsqu'on l'introduit dans ladite enceinte à vide, une pression ambiante égale à la pression atmosphérique, et

   - blanchiment des denrées par confinement de celles-ci dans un autoclave contenant de l'eau à température élevée pendant une durée déterminée.

   Ce procédé est caractérisé en ce que ledit liquide d'imprégnation desdites denrées est un mélange d'eau et de matière amylacée en suspension.

   Le terme "matière amylacée" regroupe, dans le contexte de la présente invention, l'amidon et les fécules, selon la définition qui en est donnée par la directive n° 79112 CEE du 18 Décembre 1978 du Conseil des Communautés Européennes.

En pratique, il s'agit des amidons et fécules natifs d'une part, et d'amidons et fécules modifiés d'autre part tels que définis notamment par la "Proposition de directive du Conseil relative au rapprochement des législations des Etats membres concernant les amidons modifiés destinés à l'alimentation humaine" parue au Journal Officiel des Communautés Européennes, Commission ref. COM (84) 726 final n° C 31.

L'expérience montre que l'utilisation d'une matière amylacée en lieu et place d'une matière colloïdale procure un ensemble surprenant d'avantages.

Les matières amylacées comme l'amidon sont des produits végétaux et non d'origine animale, ce qui permet aisément d'éliminer tous risques bactériologiques.

Il s'agit d'un produit extrêmement répandu entrant régulièrement dans la fabrication de conserves et de plats cuisinés, ce qui présente l'avantage d'une grande disponibilité commerciale.

Les matières amylacées utilisées dans la présente invention diffèrent notamment du riz broyé, ou "crème de riz", dont la granulation est hétérogène et qui contient, outre l'amidon, des protéines, des fibres et des graisse en quantités non négligeables.

Les matières amylacées mises en oeuvre impliquent en général un procédé de fabrication par voie humide, à partir de grains de riz ou de brisures de riz, par exemple, lorsqu'il s'agit d'amidon de riz, procédé comportant les étapes suivantes :

- macération
- mouture
- tamisage
- centrifugation
- séchage
- mouture du produit séché

Un procédé équivalent est, bien entendu, utilisé pour extraire l'amidon de divers produits qui en contiennent.

L'utilisation de riz broyé, ou d'amidon n'ayant pas subi ces divers traitements d'extraction, aboutit à des résultats non-satisfaisants, notamment en permettant une perte de poids excessive des denrées lors de leur traitement, comme le mentionne le brevet U.S. n° 4.407.832 (A.M. FERGUSON).

Il convient de noter que le procédé devient ainsi substantiellement moins coûteux, l'amidon, de riz par exemple, étant une substance beaucoup moins chère que le blanc d'oeuf ou d'autres substances colloïdales.

Un autre avantage du procédé suivant la présente invention est que l'amidon ne mousse pas au contraire du blanc d'oeuf. Ceci évite donc une opération de lavage. La Demanderesse a en outre constaté qu'un traitement des champignons à l'aide d'une matière amylacée permet de réduire la durée de l'opération de blanchiment.

Ceci présente l'avantage d'éviter le noircissement des champignons au contact de l'air d'une part, et de préserver mieux que suivant les procédés connus les caractéristiques organoleptiques des champignons, d'autre part.

Le procédé suivant la présente invention implique le maintien de la matière amylacée en suspension homogène dans l'eau à l'aide d'un agitateur avant introduction du liquide d'imprégnation ainsi constitué dans l'enceinte contenant les denrées que l'on traite. Après le traitement et le rétablissement de la pression atmosphérique dans l'enceinte de traitement on récupère le liquide d'imprégnation en excès et on le recycle pour une nouvelle imprégnation, ses propriétés initiales et sa composition étant conservées intactes.

Dans la mise en oeuvre du procédé suivant la présente invention on réduit la pression dans l'enceinte à vide pendant une durée déterminée qui précède immédiatement l'imprégnation, à l'aide d'une pompe à vide communiquant avec l'enceinte à vide, qui permet de réaliser cette diminution de pression, et de la maintenir le temps nécessaire à une désaération suffisante des champignons pour permettre leur imprégnation ultérieure. Après l'imprégnation dans l'enceinte à vide des champignons, on introduit ceux-ci dans un "blancheur" pour y subir un traitement à une température d'environ 95°C pendant une durée qui peut être égale ou inférieure à 6 mn.

Une vis sans fin en tôle perforée ménagée à l'intérieur du blancheur assure le déplacement des champignons de l'entrée de l'autoclave qui se fait à l'une de ses extrémités vers un convoyeur d'évacuation situé à l'autre extrémité de l'autoclave.

Les caractéristiques et avantages de la présente invention ressortiront d'ailleurs de la description qui va suivre d'un exemple de réalisation d'un dispositif et d'un procédé selon l'invention en référence aux dessins annexés dans lesquels :

la figure 1 représente schématiquement et en perspective une première partie d'un dispositif selon l'invention ;

la figure 2 représente schématiquement et en perspective une deuxième partie d'un dispositif selon l'invention ;

la figure 3 est un diagramme représentant symboliquement les différentes étapes d'un procédé selon l'invention.

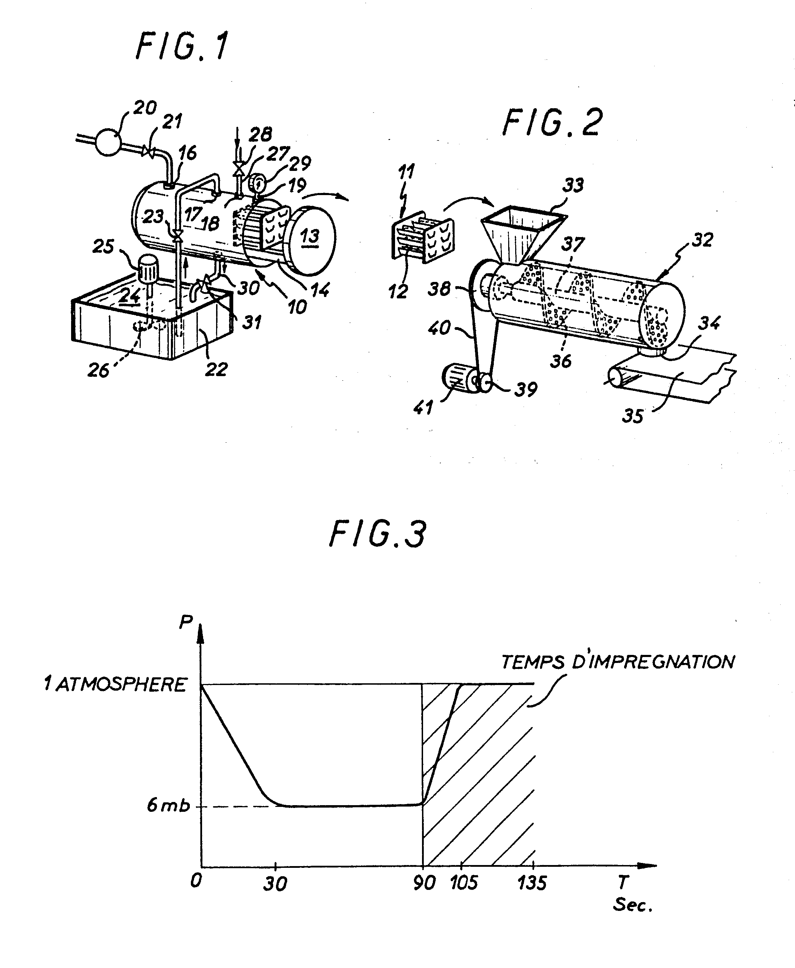

Plus en détail, la figure 1 représente schématiquement à titre d'exemple, les éléments du dispositif mis en oeuvre dans une première étape du procédé selon l'invention.

Une cuve à vide 10 s'ouvre par déplacement axial, selon son axe principal, d'un couvercle 13 obturant l'une de ses extrémités. Le couvercle 13 est solidaire de deux longerons 14 coulissant dans des éléments adaptés (non représentés) disposés à l'intérieur de la cuve 10.

Les longerons 14 comportent des zones d'appui aptes à supporter des barquettes 11.

Les barquettes 11 sont constituées de deux parois 15 sensiblement carrées, disposées parallèles et en regard l'une de l'autre, reliées entre elles par une série d'auges 12

**0197805**

encastrées par leurs deux extrémités dans les parois 15.

Ces auges 12, parallèles entre elles, servent de réceptacles aux denrées à traiter.

Dans le mode de réalisation choisi à titre d'exemple pour illustrer l'invention, chaque barquette comporte six auges 12 rangées en deux colonnes parallèles de trois auges superposées.

Quatre orifices 16, 17, 18 et 19 sont ménagés dans la partie supérieure de la cuve à vide 10, chaque orifice mettant en liaison l'intérieur de la cuve 10, de manière étanche vis-à-vis du milieu environnant, avec les éléments suivants :

- l'orifice 16 est relié, par un tuyau, à une pompe à vide 20, une vanne 21 étant interposée entre la cuve 10 et la pompe 20 ;

- l'orifice 17 est relié, par un tuyau dit d'aspiration, à un récipient 22 contenant un liquide 24, une vanne 23 étant interposée dans le tuyau d'aspiration ;

- le liquide 24 contenu par le récipient 22 est maintenu homogène grâce à un agitateur 25 dont l'hélice 26 est immergée dans le liquide 24 ;

- l'orifice 18 est relié, par un tuyau 27, à l'air libre. Une vanne 28 interrompt le tuyau 27 afin de permettre le contrôle de la mise à l'air ;

- l'orifice 19 est relié à un vacuomètre 29 qui permet de mesurer la pression interne de la cuve à vide 10.

Un tuyau d'évacuation 30 est relié à la partie inférieure de la cuve à vide, tuyau interrompu d'une vanne 31, et dont l'extrémité inférieure débouche dans le récipient 22.

La figure 2 représente schématiquement les éléments d'un dispositif mis en oeuvre lors d'une deuxième étape du procédé selon l'invention. Un autoclave 32, dénommé "blancheur", de forme allongée et sensiblement disposé horizontalement, comporte à l'une de ses extrémités et à sa partie supérieure une entrée des denrées 33 sensiblement en forme d'entonnoir.

Au fond de l'entrée 33 sont disposés des moyens d'obturation (non représentés).

A l'extrémité opposée du blancheur 32, et à sa partie inférieure, se trouve une sortie 34 permettant l'évacuation des denrées après passage dans le blancheur.

Cette sortie 34 surplombe un convoyeur 35 d'un genre connu en soi.

Dans le mode de réalisation décrit, le blancheur 32 présente une section transversale cylindrique.

Une vis d'archimède 36, dont les pales sont en tôle perforée, est montée concentriquement à l'intérieur du blancheur.

Le diamètre hors tout de la vis d'archimède 36 est sensiblement égal au diamètre intérieur du blancheur.

L'axe 37 de la vis d'archimède 36 est solidaire en rotation de moyens d'entraînement extérieur au blancheur, avantageusement une poulie menée 38, une poulie menante 39, reliées entre elles par une courroie d'entraînement 40.

La poulie menante 39 est mise en rotation par un moteur 41.

Le procédé selon l'invention va être décrit ci-après, procédé dont les étapes sont symboliquement illustrées par la figure 3.

Dans un premier temps, les denrées, ici des champignons de couche, sont disposées dans les auges 12 des barquettes 11. Les barquettes 11 sont placées, à l'aide des moyens appropriés (non décrits) à l'intérieur de la cuve à vide 10, qui est ensuite refermée.

La pompe à vide 20 est ensuite mise en action, après ouverture de la vanne 21, et ce pendant 30 secondes environ.

Afin de permettre la diminution de pression, les vannes 23, 28 et 31 sont fermées pendant ce temps.

On fait descendre la pression à 6 millibars, en la contrôlant à l'aide du vacuomètre 29, puis on la maintient à ce niveau pendant 60 secondes en fermant la vanne 21.

Le temps écoulé depuis le début du traitement est alors de 90 secondes.

0197805

On ouvre alors la vanne 23, ce qui permet, par aspiration, de faire monter le liquide 24 contenu dans le récipient 22 jusque dans la cuve à vide 10.

Le liquide 24 est une suspension d'eau et de matière amylacée, suspension maintenue homogène grâce à l'agitateur 25.

Avantageusement, l'amidon en suspension est de l'amidon de riz (il est néanmoins possible d'utiliser d'autres types de substances amylacées, comme l'amidon de maïs, par exemple).

Il est aisé et peu onéreux de se procurer de l'amidon de riz, qui est couramment pré-conditionné et commercialisé comme sous-produit pour l'industrie alimentaire.

L'amidon de riz commercialisé sous le nom "Remyline A.C." convient très bien, par exemple, à la réalisation d'une suspension utilisable dans le procédé décrit suivant l'invention.

Le liquide 24 entrant dans la cuve à vide 10 rétablit une pression égale à la pression atmosphérique en 15 secondes environ.

On laisse le liquide pendant encore 30 secondes à la pression atmosphérique dans la cuve 10.

Ainsi, le temps d'imprégnation total est de 45 secondes environ.

A la fin du temps d'imprégnation, soit au bout de 135 secondes depuis le début du procédé, on évacue le liquide d'imprégnation en ouvrant les vannes 28 de mise à l'air et 31 d'évacuation. Ainsi, le liquide 24 redescend dans le récipient 22 où il est conservé jusqu'à réutilisation.

On récupère ensuite les champignons que l'on dirige vers le blancheur.

Dans le blancheur 32, un traitement thermique, dit blanchiment, des champignons est effectué à 95°C pendant trois à six minutes selon la grosseur de ceux-ci.

La vis d'archimède 36 fait progresser les champignons jusqu'à l'orifice 34 d'où ils tombent sur le convoyeur 35 qui les évacue vers des postes de conditionnement.

Les faits suivants, particuliers au procédé de traitement selon l'invention et tel que décrit, sont particulièrement remarquables :

. la perte de poids, inconvénient notoire du traitement des champignons, est réduite, et dans l'exemple de réalisation décrit prend les valeurs suivantes en fonction de la proportion de matières amylacées en suspension dans le liquide d'imprégnation :

| Teneur en matière amylacée % en poids de liquide de traitement | Diminution de la perte en poids % |
|---|---|
| 1,5 | 3,5 |
| 5 | 6 |
| 10 | 10 |
| 20 | 22 |

. la durée de l'étape de blanchiment est considérablement réduite par rapport à sa durée traditionnelle, qui est de douze minutes environ.

Ce dernier aspect présente des avantages particulièrement importants :

- du point de vue économique, il est évidemment avantageux de réduire le temps de traitement ainsi que la quantité d'énergie utilisée pour chauffer le blancheur ;

- du point de vue qualitatif, une réduction du temps et de la température de blanchiment évite une cuisson excessive, ce qui aide à conserver les propriétés organoleptiques des champignons ;

- l'utilisation de matières amylacées, en lieu et place des substances colloïdales utilisées traditionnellement, évite la production de mousse, particulièrement gênante puisqu'impliquant soit une opération de lavage, préalable à l'étape de blanchiment, soit l'adjonction d'un produit anti-moussant, interdit par certaines réglementations, françaises notamment.

Il appartient bien entendu à l'homme de l'art d'adapter le procédé décrit en fonction, soit des denrées à traiter, soit des critères qualitatifs et/ou économiques, afin d'en optimiser la mise en oeuvre, l'invention ne se limitant aucunement à l'exemple décrit ci-avant.

0197805

REVENDICATIONS

1) Procédé de traitement suivant la présente invention pour la conservation des denrées périssables présentant des vides ou des pores comportant de manière connue en soi les étapes de :

- réduction de la pression de l'air à l'intérieur d'une enceinte à vide hermétiquement close dans laquelle sont placées les denrées périssables, et ce pendant une durée déterminée ;

- imprégnation desdites denrées avec un liquide qui rétablit, lorsqu'on l'introduit dans ladite enceinte à vide une pression ambiante égale à la pression atmosphérique, et

- blanchiment des denrées par confinement de celles-ci dans un récipient dit "blancheur" contenant de l'eau à température élevée pendant une durée déterminée.

Le procédé est caractérisé en ce que ledit liquide d'imprégnation desdites denrées est un mélange d'eau et de matière amylacée en suspension.

2) Procédé suivant la revendication 1, caractérisé en ce que l'on maintient la matière amylacée en suspension homogène dans l'eau à l'aide d'un agitateur (25) avant introduction du liquide d'imprégnation ainsi constitué dans l'enceinte (10) contenant les denrées que l'on traite.

3) Procédé suivant la revendication 1 ou 2, caractérisé en ce qu'après le traitement et le rétablissement de la pression atmosphérique dans l'enceinte (10) de traitement on récupère le liquide d'imprégnation (24) en excès et on le recycle pour une nouvelle imprégnation.

4) Procédé suivant l'une quelconque des revendications précédentes, caractérisé en ce qu'après l'imprégnation dans l'enceinte à vide des champignons, on introduit ceux-ci dans un "blancheur" (32) pour y subir un traitement à une température d'environ 95°C pendant une durée qui peut être égale ou inférieure à 6 mn.

5) Procédé suivant l'une quelconque des revendications précédentes, caractérisé en ce que le liquide de traitement (24) a une teneur en matière amylacée comprise

0197805

entre 1 et 30 pour cent en poids.

6) Procédé suivant l'une quelconque des revendications précédentes, caractérisé en ce que lesdites denrées sont des champignons de couche.

7) Dispositif de traitement des denrées périssables, présentant des vides ou des pores, telles que les champignons de couche, comportant une enceinte (10) dite d'imprégnation reliée à une pompe à vide (20) permettant de diminuer de façon significative la pression du milieu confiné à l'intérieur de ladite enceinte, en outre reliée à un récipient (22) par deux conduits, l'un destiné à amener un liquide à l'intérieur de ladite enceinte d'imprégnation, l'autre à évacuer ledit liquide, caractérisé en ce que ledit récipient (20) comporte un agitateur (25) pour agiter ledit liquide (22) lorsqu'il se trouve dans ledit récipient.

8) Dispositif selon la revendication 7 du genre comportant en outre un autoclave (32) de blanchiment , caractérisé en ce que ledit autoclave est muni d'une vis d'archimède (36) en tôle perforée montée axialement à l'intérieur de celui-ci et destinée à faire avancer les denrées à traiter vers un convoyeur d'évacuation (35).

1/1.

0197805

# FIG.1

# FIG.2

# FIG.3

## Office européen des brevets

# RAPPORT DE RECHERCHE EUROPEENNE

EP  86  40  0370

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| X | US-A-4 407 832 (A.M. FERGUSON) <br> * Revendications 1,8; colonne 13, lignes 9-13; colonne 11, lignes 46-49; colonne 3, ligne 28 - colonne 4, ligne 32 * | 1,4-6 | A 23 B 7/156 <br> A 23 B 7/06 <br> A 23 L 3/00 |
| X,Y | EP-A-0 072 263 (M. BLANCHAUD et al.) <br> * Revendication 1; page 6, ligne 36; page 1, lignes 19-20; figures 4-6,2,1; revendications 9-14; page 3, lignes 11-14 * | 1,3,7, 8 | |
| Y | US-A-3 086 444 (W. DE BACK) <br> * Figures 6,7 * | 8 | |
| A | FR-A-2 227 833 (THE CLOROX CO.) | | **DOMAINES TECHNIQUES RECHERCHES (Int. Cl 4)** |
| A | US-A-4 328 251 (M. BLANCHAUD et al.) | | A 23 B <br> A 23 L |
| A | US-A-1 637 068 (W.W. WILLISON) | | |

Le présent rapport de recherche a été établi pour toutes les revendications

| Lieu de la recherche | Date d'achèvement de la recherche | Examinateur |
|---|---|---|
| LA HAYE | 29-07-1986 | GUYON R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82